# EUROPEAN PATENT APPLICATION

(11) **EP 4 080 730 A1**
(43) Date of publication of application: **26.10.2022**
(21) Application number: 21744522.0
(22) Date of filing: 15.01.2021
(51) Int. Cl.: H02K 1/02, B32B 5/02, B32B 15/08, F16H 49/00, H02K 49/10

(54) **MAGNETIC POLE-PIECE DEVICE AND MAGNETIC GEAR**

(30) Priority: 24.01.2020 JP 2020009718
(71) Applicant: Mitsubishi Heavy Industries, Ltd., Tokyo 100-8332 (JP)
(72) Inventor: OKABE, Ryoji, Tokyo 100-8332 (JP); SASAKI, Mikito, Tokyo 100-8332 (JP); MATSUSHITA, Takatoshi, Tokyo 100-8332 (JP)
(74) Representative: Studio Torta S.p.A.
(86) International application number: PCT/JP2021/001201
(87) International publication number: WO 2021/149603

(57) **Abstract**

A magnetic pole piece device, which is disposed between an inner diameter side magnet field and an outer diameter side magnet field of a magnetic gear, includes a plurality of magnetic pole pieces disposed at intervals in a circumferential direction of the magnetic gear. Each of the plurality of magnetic pole pieces includes a plurality of plate-shaped electrical steel sheets having a longitudinal direction. The plurality of electrical steel sheets are laminated along the circumferential direction, with the longitudinal direction being along an axial direction of the magnetic gear.

## Description

### TECHNICAL FIELD

The present disclosure relates to a magnetic pole piece device and a magnetic gear including the magnetic pole piece device.

### BACKGROUND

As one type of gear device, there is a magnetic gear which utilizes an attractive force and a repulsive force of a magnet to transmit torque or motion in a non-contact manner, thereby being able to avoid a problem such as wear, vibration, or noise caused by tooth contact. A flux-modulated type (harmonic type) magnetic gear of the magnetic gear includes an inner circumferential side magnet field and an outer circumferential side magnet field concentrically (coaxially) disposed, and a magnetic pole piece device which has a plurality of magnetic pole pieces (pole pieces) and a plurality of non-magnetic materials each being disposed with a gap (air gap) between these two magnet fields and alternately arranged in the circumferential direction (see Patent Documents 1 and 2). Then, magnetic fluxes of magnets of the above-described two magnet fields are modulated by the above-described respective magnetic pole pieces to generate harmonic magnetic fluxes, and the above-described two magnet fields are synchronized with the harmonic magnetic fluxes, respectively, thereby operating the flux-modulated type magnetic gear.

For example, in a magnetic geared motor in which the flux-modulated type magnetic gear and a motor are integrated, the above-described outer circumferential side magnet field is fixed to function as a stator, as well as the above-described inner circumferential side magnet field is functioned as a high-speed rotor and the above-described magnetic pole piece device is functioned as a low-speed rotor. Then, by rotating the high-speed rotor by a magnetomotive force of a coil, the low-speed rotor rotates according to the reduction ratio which is determined by the ratio of the number of pole pairs of the high-speed rotor and the number of pole pairs of the low-speed rotor. As the magnetic geared motor, for example, a type in which a permanent magnet is installed in a high-speed rotor and a stator, or a type in which a permanent magnet is installed only in a high-speed rotor is known.

### Citation List

### Patent Literature

Patent Document 1: US Patent Application Publication No. 2018/0269770
Patent Document 2: JP5286373B

### SUMMARY

### Technical Problem

As described in Patent Document 1, a plurality of magnetic pole pieces of the above-described magnetic pole piece device are usually formed by laminating steel sheets (electrical steel sheets) in a direction (axial direction) along a rotational axis of the magnetic pole piece device. However, the problem arises in that efficiency is decreased when an iron loss (eddy current loss) is caused due to an axial leakage magnetic flux at an end of the magnetic pole piece.

In view of the above, an object of at least one embodiment of the present invention is to provide a magnetic pole piece device seeking to suppress the axial leakage magnetic flux at the end of the magnetic pole piece.

### Solution to Problem

A magnetic pole piece device according to at least one embodiment of the present invention is a magnetic pole piece device disposed between an inner diameter side magnet field and an outer diameter side magnet field of a magnetic gear, that includes a plurality of magnetic pole pieces disposed at intervals in a circumferential direction of the magnetic gear. Each of the plurality of magnetic pole pieces includes a plurality of plate-shaped electrical steel sheets having a longitudinal direction. The plurality of electrical steel sheets are laminated along the circumferential direction, with the longitudinal direction being along an axial direction of the magnetic gear.

A magnetic gear according to at least one embodiment of the present invention includes: an inner diameter side magnet field; an outer diameter side magnet field disposed on an outer diameter side relative to the inner diameter side magnet field; and the above-described magnetic pole piece device disposed between the inner diameter side magnet field and the outer diameter side magnet field.

### Advantageous Effects

According to at least one embodiment of the present invention, a magnetic pole piece device is provided which seeks to suppress an iron loss (eddy current loss) due to an axial leakage magnetic flux at an end of a magnetic pole piece.

### BRIEF DESCRIPTION OF DRAWINGS

FIG. 1 is a schematic view showing a cross section of a magnetic gear orthogonal to the axial direction according to an embodiment of the present invention.
FIG. 2 is a partially enlarged view of the cross section of the magnetic gear shown in FIG. 1.
FIG. 3 is a schematic view of a magnetic pole piece according to an embodiment of the present invention.
FIG. 4A is a schematic view of the magnetic pole piece including highly thermal conductive plates according to an embodiment of the present invention.
FIG. 4B is a graph showing the relationship between the tensile modulus and the thermal conductivity of CRFP.
FIG. 5 is a schematic view of the magnetic pole piece having a round-shaped end according to an embodiment of the present invention.
FIG. 6 is a schematic view of the magnetic pole piece having anisotropy of magnetic permeability according to an embodiment of the present invention.
FIG. 7 is a schematic view of the magnetic pole piece including a divided electrical steel sheet according to an embodiment of the present invention.
FIG. 8 is a schematic view of the magnetic pole piece including the divided electrical steel sheet according to an embodiment of the present invention, where division positions are dispersed.
FIG. 9 is a schematic view of the magnetic pole piece including a slit electrical steel sheet according to an embodiment of the present invention.
FIG. 10 is a schematic view of the magnetic pole piece including the slit electrical steel sheet according to an embodiment of the present invention, where notch positions are dispersed.
FIG. 11 is a schematic view of the magnetic pole piece obtained by lamination by line welding according to an embodiment of the present invention.
FIG. 12 is a schematic view of the magnetic pole piece including inclined portions according to an embodiment of the present invention.
FIG. 13 is a schematic view showing an inclination pattern of the inclined portions according to an embodiment of the present invention.
FIG. 14 is a schematic view showing an inclination pattern of the inclined portions according to another embodiment of the present invention.

### DETAILED DESCRIPTION

Some embodiments of the present invention will be described below with reference to the accompanying drawings. It is intended, however, that unless particularly identified, dimensions, materials, shapes, relative positions and the like of components described or shown in the drawings as the embodiments shall be interpreted as illustrative only and not intended to limit the scope of the present invention.

For instance, an expression of relative or absolute arrangement such as "in a direction", "along a direction", "parallel", "orthogonal", "centered", "concentric" and "coaxial" shall not be construed as indicating only the arrangement in a strict literal sense, but also includes a state where the arrangement is relatively displaced by a tolerance, or by an angle or a distance whereby it is possible to achieve the same function.

For instance, an expression of an equal state such as "same", "equal", and "uniform" shall not be construed as indicating only the state in which the feature is strictly equal, but also includes a state in which there is a tolerance or a difference that can still achieve the same function.

Further, for instance, an expression of a shape such as a rectangular shape or a tubular shape shall not be construed as only the geometrically strict shape, but also includes a shape with unevenness or chamfered corners within the range in which the same effect can be achieved.

On the other hand, the expressions "comprising", "including", "having", "containing", and "constituting" one constituent component are not exclusive expressions that exclude the presence of other constituent components.

### (Configuration of magnetic gear 9)

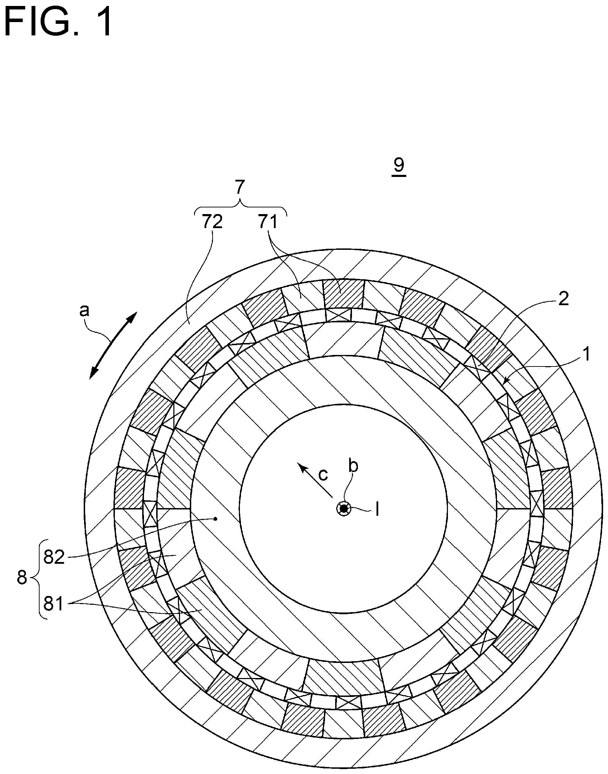

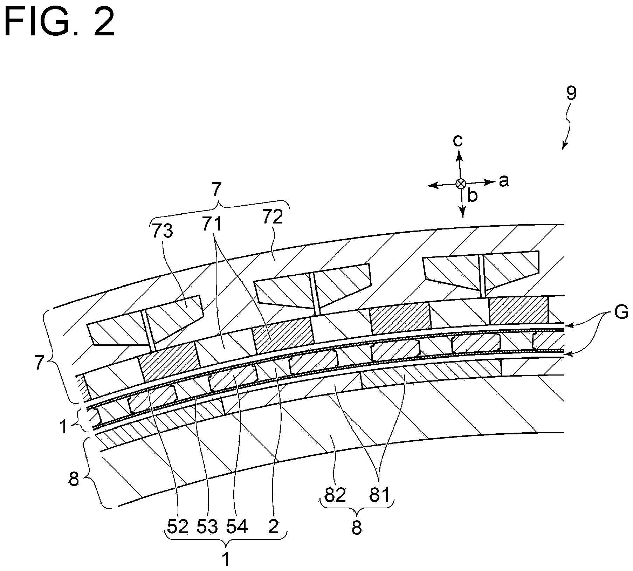

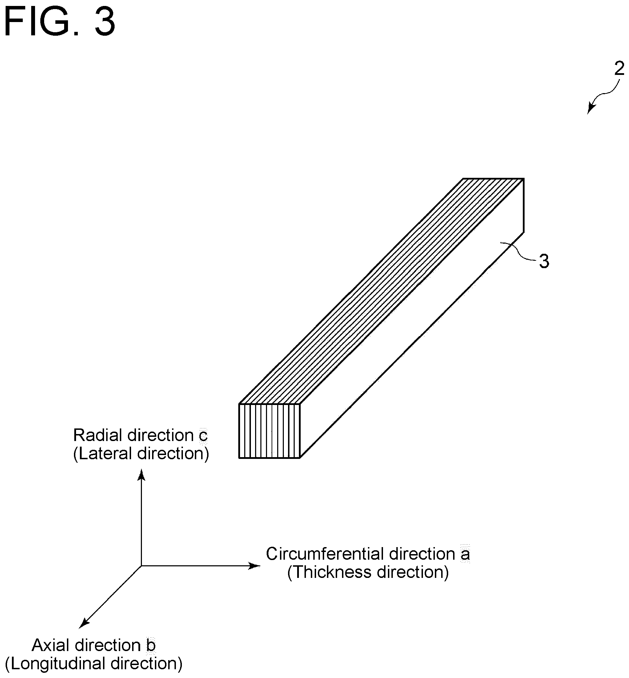

FIG. 1 is a schematic view showing a cross section of a magnetic gear 9 orthogonal to an axial direction b according to an embodiment of the present invention. Further, FIG. 2 is a partially enlarged view of the cross section of the magnetic gear shown in FIG. 1. FIGs. 3, 4A, and 5 to 14 are each a schematic view of a magnetic pole piece 2 according to an embodiment of the present invention. In the following, a description will be given with a direction along a rotation direction of the magnetic gear 9 (magnetic pole piece device 1) being a circumferential direction a, a direction along a rotational axis (axis 1) of the magnetic gear 9 (magnetic pole piece device 1) being the axial direction b, and a direction (radial direction) orthogonal to the circumferential direction a and the axial direction b described above being a radial direction c.

The magnetic gear 9 is a device having a mechanism for transmitting torque in a non-contact manner by utilizing an attractive force and a repulsive force of a magnet. The magnetic gear 9 shown in FIGs. 1 and 2 is of a flux-modulated type (harmonic type) and as illustrated, includes an outer diameter side magnet field 7 (outer rotor) having a cylindrical shape (annular; the same applies hereinafter) as a whole, an inner diameter side magnet field 8 (inner rotor) having a cylindrical or columnar shape as a whole, and a magnetic pole piece device 1 (center rotor) having a cylindrical shape as a whole. Then, the magnetic gear 9 has a structure where the outer diameter side magnet field 7, the inner diameter side magnet field 8, and the magnetic pole piece device 1 are disposed at intervals (air gaps G) of a constant distance from each other in the radial direction c on the same axis 1 (coaxial) when the magnetic pole piece device 1 is disposed between the outer diameter side magnet field 7 and the inner diameter side magnet field 8. That is, the outer diameter side magnet field 7 is disposed on the radially outer side (outer diameter side) relative to the inner diameter side magnet field 8. Further, the magnetic pole piece device 1 is disposed between the inner diameter side magnet field 8 and the outer diameter side magnet field 7. Then, the outer diameter side magnet field 7, the inner diameter side magnet field 8, and the magnetic pole piece device 1 are disposed concentrically.

Further, as shown in FIG. 2, the outer diameter side magnet field 7 and the inner diameter side magnet field 8 described above, respectively, include magnetic pole pairs (71, 81) of a permanent magnet or the like which are composed of a plurality of N poles and S poles disposed at intervals (regular intervals) on the circumference in a cross section of the magnetic geared 9 cut along the radial direction c. More specifically, the outer diameter side magnet field 7 includes the plurality of magnetic pole pairs 71 and a support member 72 for supporting the plurality of magnetic pole pairs 71. Then, on the cylindrical inner circumferential surface of the outer diameter side magnet field 7, the plurality of magnetic pole pairs 71 are installed over the whole circumference in a state where the magnetic poles face the radial direction c and such that the N poles and the S poles are alternated along the circumferential direction. Likewise, the above-described inner diameter side magnet field 8 includes the plurality of magnetic pole pairs 81 and a columnar support member 82 for supporting the plurality of magnetic pole pairs 81. Then, on the cylindrical outer circumferential surface of the inner diameter side magnet field 8, the plurality of magnetic pole pairs 81 are installed over the whole circumference along the circumferential direction a in the same manner as above. Further, the magnetic pole piece device 1 includes a plurality of magnetic pole pieces 2 (pole pieces) disposed at intervals (regular intervals) from each other over the whole circumference in the circumferential direction a. Then, for example, if the inner diameter side magnet field 8 is rotated, the magnetic flux of the inner diameter side magnet field 8 is modulated by the magnetic pole pieces of the magnetic pole piece device 1, and rotational torque is generated in the magnetic pole piece device 1 by the action of the modulated magnetic field and the outer diameter side magnet field 7.

For example, as shown in FIG. 2, the above-described magnetic pole piece device 1 may include an outer circumferential cover member 52 and an inner circumferential cover member 53 disposed on the outer side and the inner side in the radial direction c so as to sandwich the above-described plurality of magnetic pole pieces 2. The outer circumferential cover member 52 and the inner circumferential cover member 53 are members each having a cylindrical shape, and the diameter of the inner circumferential cover member 53 is smaller than the diameter of the outer circumferential cover member 52. Thus, if the inner circumferential cover member 53 is disposed coaxially on the inner side of the outer circumferential cover member 52, a cylindrical space is formed over the entire circumference between the inner circumferential surface of the outer circumferential cover member 52 and the outer circumferential surface of the inner circumferential cover member 53. Then, in the cylindrical space, the plurality of long magnetic pole pieces 2 are disposed at intervals in the circumferential direction a with a longitudinal direction of each of the magnetic pole pieces 2 oriented along the axial direction b. At this time, a section (interjacent space 54) between the plurality of magnetic pole pieces 2 may be a space, or a non-magnetic material may be installed in the section. However, the magnetic pole piece device 1 may not have the above-described two cover members, or may be configured to include the non-magnetic material installed between the plurality of magnetic pole pieces 2.

In the embodiments shown in FIGs. 1 and 2, the magnetic gear 9 (flux-modulated type magnetic gear) is integrated with a motor to form a magnetic geared motor. In more details, a plurality of coils 73 are installed in the outer diameter side magnet field 7 to each be used as a stator, and the inner diameter side magnet field 8 (high-speed rotor) is rotated by a magnetomotive force of the coils 73. Thus, the magnetic pole piece device 1 (low-speed rotor) rotates according to the reduction ratio which is determined by the ratio of the number of pole pairs of the magnetic pole pairs 71 of the outer diameter side magnet field 7 to the number of pole pairs of the magnetic pole pairs 81 of the inner diameter side magnet field 8.

Further, the magnetic geared motor is supplied with a cooling medium, such as air or water, in order to protect the above-described constituent elements from heat generated during operation. In the embodiments shown in FIGs. 1 and 2, as shown in FIG. 2, the cooling medium is supplied to the above-described air gaps G, which are respectively formed on the inner circumferential side and the outer circumferential side of the magnetic pole piece device 1, so as to flow from one end side toward another end side. Further, the cooling medium is similarly supplied to a gap formed between the outer diameter side magnet field 7 and a housing (not shown) located on the outer peripheral side thereof. A gas such as air may be supplied to the gap between the outer diameter side magnet field 7 and the housing (not shown) described above, or a water cooling tube may be installed to flow cooling water or the like through the water cooling tube.

Although the case where the magnetic gear 9 is the magnetic geared motor has been described as an example, the magnetic gear 9 can also operate as a magnetic geared generator. In this case, the magnetic pole piece device 1 (center rotor) rotates with the rotation of the inner diameter side magnet field 8 (inner rotor). The operation of the magnetic pole piece device 1 differs depending on whether the magnetic pole piece device 1 is the magnetic geared motor or the magnetic geared generator, but the structure of the device is the same.

### (Configuration of magnetic pole piece device 1)

In the magnetic gear 9 (flux-modulated type magnetic gear) having the above configuration, as shown in FIGs. 3 to 14, each of the plurality of magnetic pole pieces 2 of the magnetic pole piece device 1 includes a plurality of plate-shaped electrical steel sheets 3 having a longitudinal direction. More specifically, each electrical steel sheet 3 is a plate member in which a soft magnetic material is processed into the plate shape, and has a long side of a predetermined length extending in the longitudinal direction, a short side of a predetermined length extending in the lateral direction, and a predetermined length (thickness) in a thickness direction orthogonal to each of the longitudinal direction and the lateral direction. At least a part of the surface of each electrical steel sheet 3 may be coated with an insulating film.

Then, as shown in FIG. 3, in each magnetic pole piece 2, the plurality of electrical steel sheets 3 are laminated along the circumferential direction a, with the longitudinal direction thereof being along the axial direction b. That is, a lamination direction of the plurality of electrical steel sheets 3 in each magnetic pole piece 2 is the direction along the circumferential direction a (the thickness direction of the electrical steel sheet 3) in the state of being disposed in the magnetic pole piece device 1. Consequently, in the state of being disposed in the magnetic pole piece device 1, the ends of each magnetic pole piece 2 in the axial direction b and the radial direction c are each formed into a slit shape by laminating the plurality of electrical steel sheets 3. Thus, it is possible to reduce an iron loss (eddy current loss) due to a leakage magnetic flux at the end of each magnetic pole piece 2 in the axial direction b. If each electrical steel sheet 3 has the above-described insulating film, the insulating film exists between the adjacent electrical steel sheets 3 in the laminated state, making it possible to further suppress the above-described iron loss.

In the embodiments shown in FIGs. 3 to 14, each electrical steel sheet 3 has the longitudinal direction and the lateral direction orthogonal to each other, and is a quadrangular plate member. Then, the length of each electrical steel sheet 3 in the longitudinal direction is a length corresponding to the lengths of the outer diameter side magnet field 7 and the inner diameter side magnet field 8 in the axial direction b. Further, the length of each electrical steel sheet 3 in the lateral direction is a length capable of forming the appropriate air gap G over the entire circumferences on the inner circumferential side and the outer circumferential side of the magnetic pole piece device 1, when each electrical steel sheet 3 is disposed between the outer diameter side magnet field 7 and the inner diameter side magnet field 8 with the lateral direction of each electrical steel sheet 3 being along the radial direction c. Further, the thickness of each electrical steel sheet 3 is smaller than the lengths thereof in the longitudinal direction and the lateral direction. Then, each magnetic pole piece 2 is formed by integrating these plurality of electrical steel sheets 3 in the laminated state by, for example, welding or an adhesive agent.

With the above configuration, each magnetic pole piece 2 of the magnetic pole piece device 1 is formed of the plurality of electrical steel sheets 3 laminated along the circumferential direction of the magnetic gear 9 (magnetic pole piece device 1), with the longitudinal direction of each magnetic pole piece 2 being along the axial direction of the magnetic gear 9. Thus, it is possible to reduce the iron loss (eddy current loss) due to the leakage magnetic flux at the end of each magnetic pole piece 2 in the axial direction b, and it is possible to improve efficiency of the magnetic gear 9 including the magnetic pole piece device 1 described above.

Further, the number of laminated electrical steel sheets 3 required to form the magnetic pole piece 2 can be reduced as compared with the case where the plurality of electrical steel sheets 3 are laminated along the axial direction. Thus, it is possible to improve the dimensional accuracy of the magnetic pole piece 2 after the lamination (dimensional error after lamination=error in length of electrical steel sheets in lamination directionxnumber of laminated electrical steel sheets). Further, since the number of laminated electrical steel sheets 3 is thus small, it is possible to reduce misalignment in end faces of the respective electrical steel sheets 3 when the plurality of electrical steel sheets 3 are superimposed during the production of the magnetic pole piece 2 and, for example, in the case of pressure clamping and fixing by line welding, line welding fixing can easily be applied. Although a non-magnetic long fastening bolt made from a titanium alloy or the like is used when the plurality of electrical steel sheets 3 are laminated along the axial direction, such bolt becomes unnecessary, and it is also possible to reduce the number of parts and a cost.

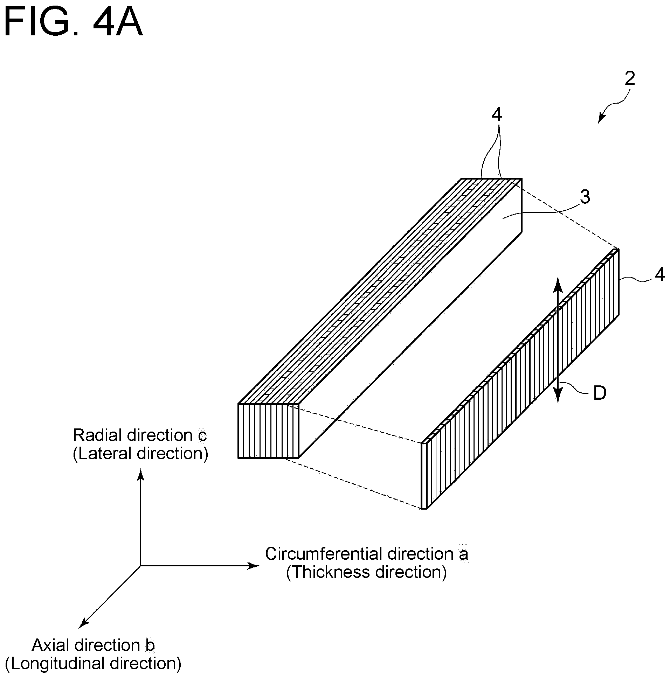

Next, some other embodiments related to the above-described magnetic pole piece 2 (pole piece) will be described with reference to FIGs. 4A to 14. In the magnetic pole piece device 1 of FIGs. 4A and FIGs 5 to 14, each magnetic pole piece 2 is disposed such that the longitudinal direction, the lateral direction, and the thick direction of each electrical steel sheet 3 are along the axial direction b, the radial direction c, and the circumferential direction a, respectively.

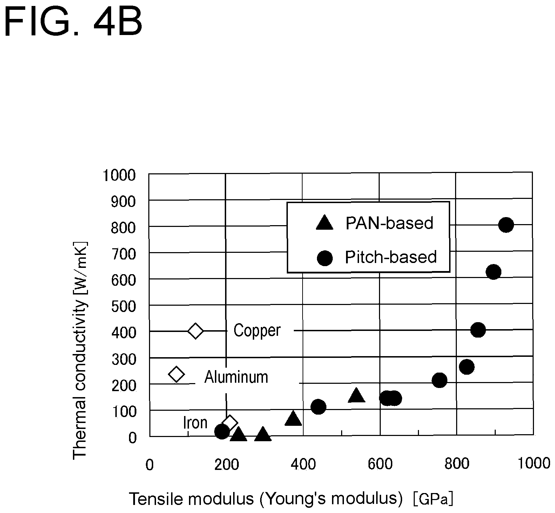

FIG. 4A is a schematic view of the magnetic pole piece 2 including highly thermal conductive plates 4 according to an embodiment of the present invention. FIG. 4B is a graph showing the relationship between the tensile modulus and the thermal conductivity of CRFP. In some embodiments, as shown in FIG. 4A, each of the plurality of magnetic pole pieces 2 may further include the highly thermal conductive plates 4 which are disposed between at least a pair of adjacent electrical steel sheets 3 of the plurality of laminated electrical steel sheets 3 and have the higher thermal conductivity than the electrical steel sheets 3. As shown in FIG. 4A, the highly thermal conductive plates 4 each have a plate shape having the longitudinal direction. The highly thermal conductive plates 4 may be produced by a material, for example, a ceramic with a high thermal conductivity, such as aluminum, copper, silicon nitride, etc., which has a higher thermal conductivity than iron, or a pitch-based or PAN (polyacrylonitrile)-based carbon fiber reinforced plastic (hereinafter, referred to as CFRP).

In the embodiment shown in FIG. 4A, each highly thermal conductive plate 4 has the longitudinal direction and the lateral direction orthogonal to each other, and is a quadrangular plate member with a long side and a short side each having the same length as the electrical steel sheet 3. Further, the thickness of the highly thermal conductive plate 4 is not greater than the thickness of the electrical steel sheet 3. However, the present invention is not limited to the present embodiment, and the dimension (the lengths, thicknesses of the long side and the short side) of the highly thermal conductive plate 4 may optionally be set.

Further, in the embodiment shown in FIG. 4A, the highly thermal conductive plate 4 is formed of pitch-based CFRP. As shown in FIG. 4B, the thermal conductivity of CFRP is dependent on the tensile modulus (Young's modulus), and the greater the tensile modulus, the higher the thermal conductivity tends to be. More specifically, the thermal conductivity of pitch-based CFRP is higher than that of iron at a tensile modulus of about 400 GPa (gigapascal). In the range of about 400 GPa to about 600 GPa, there is no big difference in thermal conductivity between pitch-based CFRP and PAN-based CFRP, and the increase rate (inclination) of the thermal conductivity with respect to the tensile modulus has a substantially constant magnitude. However, it is found that the increase rate of the thermal conductivity of pitch-based CFRP further increases at the tensile modulus between about 600 GPa and about 800 Gpa, and increases more rapidly at the tensile modulus exceeding around 800 GPa to at least about 950 Gpa. For example, the thermal conductivity of pitch-based CFRP is equivalent to that of aluminum at the tensile modulus of about 800 GPa and exceeds that of copper at the tensile modulus of about 900 GPa.

Thus, in some embodiments, the highly thermal conductive plate 4 may be formed of pitch-based CFRP. More specifically, the highly thermal conductive plate 4 may be formed of pitch-based CFRP having the tensile modulus of not less than 700 GPa, such as 700 GPa to 950 GPa or not less than 850 GPa. If pitch-based and PAN-based CFRPs are used as the highly thermal conductive plate 4, pitch-based and PAN-based CFRPs only need to have a tensile modulus at which the thermal conductivity higher than that of the electrical steel sheet 3 can be obtained, for example, pitch-based and PAN-based CFRPs have a tensile modulus of not less than 400 GPa.

As described already, in the magnetic gear 9, the cooling medium, such as cooling air, may be supplied to the respective air gaps G between the magnetic pole piece device 1 and the outer diameter side magnet field 7 and between the magnetic pole piece device 1 and the inner diameter side magnet field 8. In this case, since the cooling medium supplied to the air gaps G flows through the air gaps G along the axial direction, the heated magnetic pole piece 2 is cooled from both ends of the magnetic pole piece 2 in contact with the air gaps G in the radial direction c. However, if the thermal conductivity in the magnetic pole piece 2 is low, heat stays in the magnetic pole piece 2, resulting in a decrease in cooling performance. However, the highly thermal conductive plates 4 installed between the plurality of electrical steel sheets 3 actively conduct heat of the electrical steel sheets 3 in the radial direction c, making it possible to improve the cooling effect of the above-described two air gaps G.

With the above configuration, in each of the plurality of magnetic pole pieces 2, the plurality of electrical steel sheets 3 are laminated while sandwiching the at least one highly thermal conductive plate 4. Thus, the highly thermal conductive plate 4 installed between the plurality of electrical steel sheets 3 can more uniformly and efficiently cool the magnetic pole piece 2, and it is possible to more efficiently cool each magnetic pole piece 2 by the cooling medium passing through the respective air gaps G on the inner circumferential side and the outer circumferential side of the magnetic pole piece device 1.

Further, for example, if the highly thermal conductive plate 4 is formed of CFRP as described above, in some embodiments, as shown in FIG. 4A, each highly thermal conductive plate 4 may at least partially include a section where an orientation direction of CFRP fibers (hereinafter, referred to as a fiber direction D) is along the radial direction c. In the embodiment shown in FIG. 4A, in any of the axial direction b, the highly thermal conductive plate 4 has the fiber direction D which is oriented from one end to another end of the highly thermal conductive plate 4 in the radial direction c along the radial direction c, and all the CFRP fibers are oriented along the radial direction c.

However, the present invention is not limited to the present embodiment. In some other embodiments, in the highly thermal conductive plate 4, at least the fiber direction D in a section including the center in the longitudinal direction may be oriented along the radial direction c. For example, the fiber direction D may be along the axial direction b from at least one end, such as the end of the highly thermal conductive plate 4 on the side where the cooling medium is supplied in the axial direction b, to a predetermined range along the axial direction b. Thus, it is possible to easily conduct the heat of the magnetic pole piece 2 along the axial direction b.

With the above configuration, the CFRP fibers forming the highly thermal conductive plate 4 are oriented along the radial direction c at least in part. Heat is better conducted along the fiber direction D. Thus, since the CFRP fiber direction D is along the radial direction in the highly thermal conductive plate 4, it is possible to cool the magnetic pole piece 2 more effectively as compared with the case where the fiber direction D is oriented along a direction other than the radial direction c.

However, the present invention is not limited to the present embodiment. In some other embodiments, the fiber direction D of the highly thermal conductive plate 4 formed of CFRP may be other than the radial direction c. For example, the fibers may be oriented in a mesh shape.

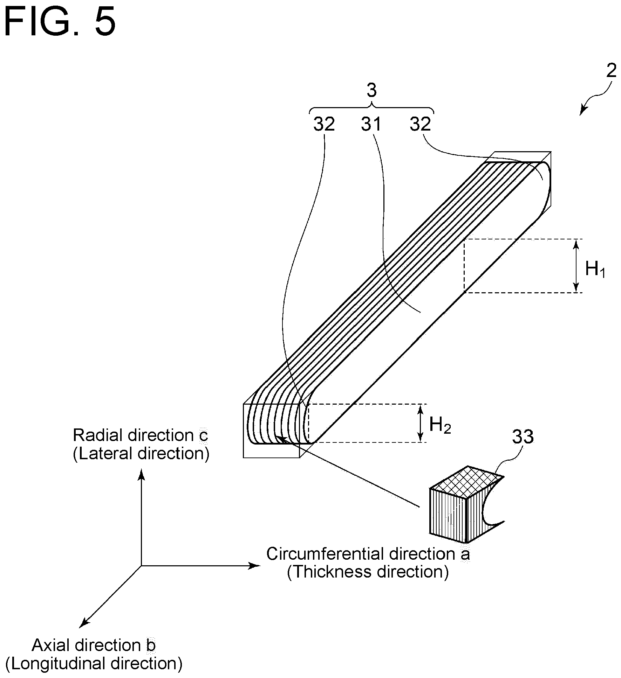

FIG. 5 is a schematic view of the magnetic pole piece 2 having a round-shaped end according to an embodiment of the present invention.

In some embodiments, as shown in FIG. 5, each of the plurality of electrical steel sheets 3 composing the magnetic pole piece 2 may include a body portion 31 having a predetermined radial height HI, and an end portion (hereinafter, referred to as a small height end portion 32) disposed on at least one side of the above-described body portion 31 in the longitudinal direction of the electrical steel sheets 3 and having a radial height H2 (H1>H2) smaller than the radial height H1 of the body portion 31 described above. With such configuration, outward expansion of magnetic flux lines from the end of the magnetic pole piece 2 formed by laminating the small height end portions 32 of the plurality of electrical steel sheets 3 is reduced, making it possible to reduce the leakage magnetic flux in the axial direction b.

In the embodiment shown in FIG. 5, the radial height H1 of the body portion 31 of each electrical steel sheet 3 is constant, and both end portions of each electrical steel sheet 3 connected to both sides of the body portion 31 in the longitudinal direction are the above-described small height end portions 32. More specifically, the both end portions of each electrical steel sheet 3 each have an arc-like shape (round shape) having a predetermined curvature radius when visually recognized from the circumferential direction a side. Then, by laminating these electrical steel sheets 3, the both ends of the magnetic pole piece 2 are formed into the arc shape.

However, the present invention is not limited to the present embodiment. In some other embodiments, the small height end portion 32 of each electrical steel sheet 3 may have a shape obtained by linearly notching the corner of the end portion, when the case is assumed in which a shape visually recognized from the circumferential direction a side is rectangular. In some other embodiments, when visually recognized from the circumferential direction a side, the small height end portion 32 of each electrical steel sheet 3 may be formed to protrude toward the axial direction b, and by decreasing the area at the tip, it is possible to reduce the magnetic flux leakage in the axial direction.

With the above configuration, in each electrical steel sheet 3, the radial height H2 of the end portion (small height end portion 32) on the at least one side in the longitudinal direction (axial direction b) is smaller than the radial height H1 of the body portion 31. Thus, it is possible to reduce the leakage magnetic flux at the end of the magnetic pole piece 2, and it is possible to suppress the iron loss (eddy current loss) at the end of the magnetic pole piece 2.

In some embodiments of the above-described embodiments, at least one of the plurality of magnetic pole pieces 2 may be a first magnetic pole piece 2a composed of the plurality of electrical steel sheets 3 having the above-described small height end portions 32. Then, as shown in FIG. 5, a cover member 33 having a higher thermal conductivity than the electrical steel sheets 3 may be mounted on the small height end portion 32 of the first magnetic pole piece 2a. Since the thermal conductivity of the cover member 33 is high, the heat of the electrical steel sheets 3 is easily conducted to the cover member 33, making it possible to promote cooling of the magnetic pole piece 2 (electrical steel sheets 3).

In the embodiment shown in FIG. 5, the above-described cover member 33 has a quadrangular shape even when the magnetic pole piece 2 to which the first magnetic pole piece 2a is mounted is visually recognized from any of the circumferential direction a, the axial direction b, and the radial direction c. Further, the cover member 33 is produced by pitch-based CFRP, and is produced such that the fiber direction D is along the radial direction c when mounted on the first magnetic pole piece 2a.

However, the present invention is not limited to the present embodiment. In some other embodiments, the cover member 33 can have any shape as long as the cover member 33 can be mounted on the small height end portion 32 of the first magnetic pole piece 2a, and the end of the first magnetic pole piece 2a may have a shape which is not visually recognized as the above-described quadrangular shape. Further, it is only necessary that the material of the cover member 33 has the higher thermal conductivity than the electrical steel sheet 3, and for example, the same material as the material of the highly thermal conductive plate 4 described above may be used, or in the case of CFRP, the fiber direction D may be a direction other than the radial direction c.

With the above configuration, the end of the magnetic pole piece 2, which is composed of the plurality of electrical steel sheets 3 having the small height end portions 32, on the small height end portion 32 side is mounted with the cover member 33 formed of, for example, a pitch-based CFRP block having the higher thermal conductivity than the electrical steel sheets 3. Thus, it is possible to further improve coolability of the magnetic pole piece 2.

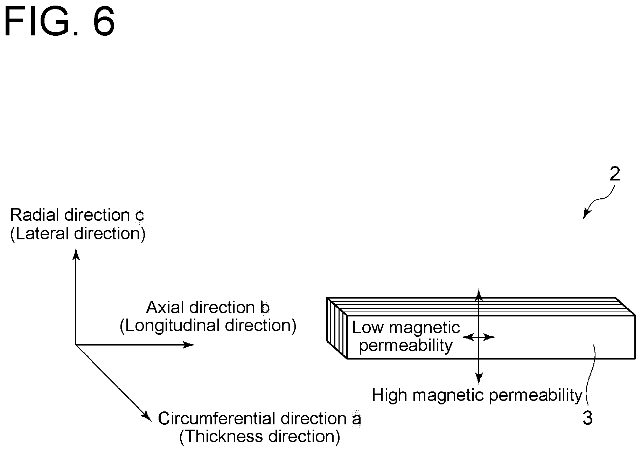

FIG. 6 is a schematic view of the magnetic pole piece 2 having anisotropy of magnetic permeability according to an embodiment of the present invention.

In some embodiments, as shown in FIG. 6, the magnetic permeability of each of the plurality of electrical steel sheets 3 composing the magnetic pole piece 2 may have anisotropy. More specifically, P1<P2 is satisfied, where P1 is a magnetic permeability of each of the plurality of electrical steel sheets 3 along the longitudinal direction and P2 is a magnetic permeability of each of the plurality of electrical steel sheets 3 along the lateral direction.

With the above configuration, each electrical steel sheet 3 has anisotropy to have good magnetic characteristics (high magnetic permeability) in the radial direction c and have a lower magnetic permeability in the axial direction b, when installed in the magnetic gear 9 as the constituent member of the magnetic pole piece 2. The magnetic field directions of the outer diameter side magnet field 7 located on the outer circumferential side of the magnetic pole piece device 1 and the inner diameter side magnet field 8 located on the inner circumferential side of the magnetic pole piece device 1 are both in the radial direction c, and each electrical steel sheet 3 has the anisotropy of the magnetic permeability so as to follow these magnetic field directions, making it possible to further reduce the leakage magnetic flux in the axial direction b. Thus, it is possible to further improve the torque or efficiency of the magnetic gear 9.

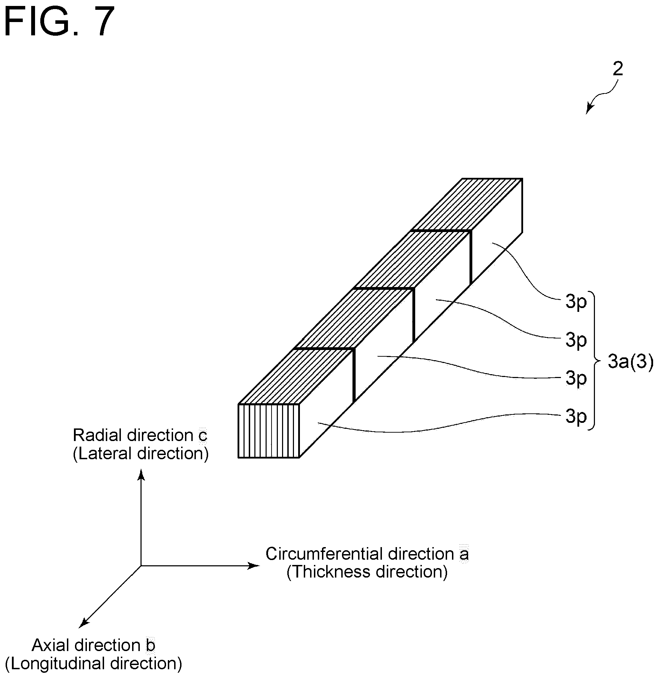

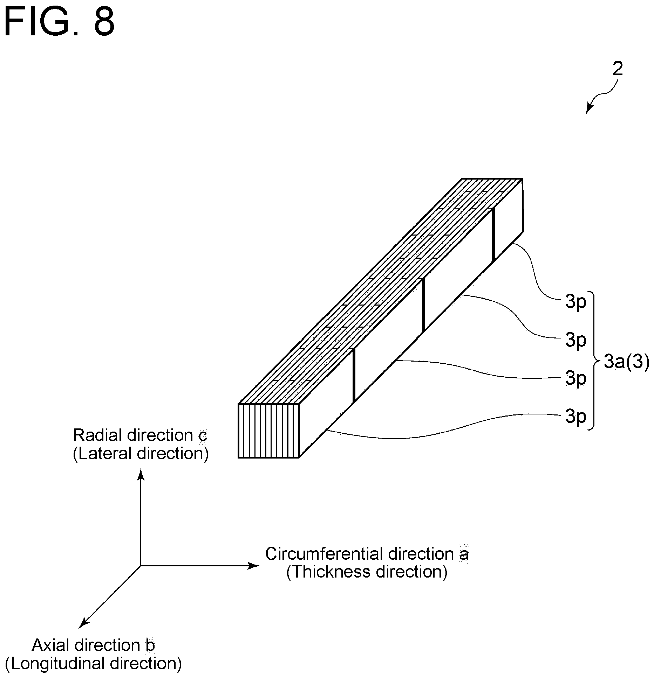

FIG. 7 is a schematic view of the magnetic pole piece 2 including a divided electrical steel sheet 3a according to an embodiment of the present invention. Further, FIG. 8 is a schematic view of the magnetic pole piece 2 including the divided electrical steel sheet 3a according to an embodiment of the present invention, where division positions are dispersed.

In some embodiments, as shown in FIGs. 7 and 8, at least one of the plurality of electrical steel sheets 3 composing the magnetic pole piece 2 may be the divided electrical steel sheet 3a which includes a plurality of plate-shaped electrical steel sheet pieces arranged along the axial direction b. That is, the divided electrical steel sheet 3a is constituted by a plurality of electrical steel sheet pieces 3p. Any number of electrical steel sheet pieces 3p may constitute the divided electrical steel sheet 3a.

With such configuration, it is possible to reduce a loop (vortex) of an eddy current generated in any face (an end face and a cross section) orthogonal to the magnetic flux (radial direction c) that passes through the electrical steel sheets 3 laminated in the circumferential direction a, and it is possible to reduce the in-plane iron loss (eddy current loss) of the electrical steel sheets 3. That is, the eddy current is generated in each plane orthogonal to the magnetic flux in the magnetic pole piece 2 according to the change in the magnetic flux along the radial direction c, but since the lamination direction of the electrical steel sheets 3 is the circumferential direction a, the loop of the eddy current is formed in each magnetic pole piece 2. Thus, it is possible to reduce each loop of the eddy current, and it is possible to reduce the above-described iron loss.

More specifically, in some embodiments, as shown in FIGs. 7 and 8, all the electrical steel sheets 3 composing any magnetic pole piece 2 may be the divided electrical steel sheets 3a.

At this time, in some embodiments, as shown in FIG. 7, boundary positions (hereinafter, referred to as division positions) of the respective electrical steel sheet pieces 3p in each divided electrical steel sheet 3a may all be the same. In the embodiment shown in FIG. 7, the plurality of (four in FIG. 7) electrical steel sheet pieces 3p constituting the one divided electrical steel sheet 3a are integrated by welding or an adhesive material. In other words, each divided electrical steel sheet 3a is disposed between two electrical steel sheet pieces 3p adjacent in the axial direction b, and includes a connecting portion for connecting the two adjacent electrical steel sheet pieces 3p.

In some other embodiments, as shown in FIG. 8, the magnetic pole piece 2 may include at least two divided electrical steel sheets 3a whose division positions in the longitudinal direction are different from each other. In other words, the magnetic pole piece 2 includes at least two divided electrical steel sheets 3a in a relationship where the division position of the first divided electrical steel sheet 3a in the longitudinal direction is different from the division position of the second divided electrical steel sheet 3a in the longitudinal direction. It is only necessary that the division position in at least one divided electrical steel sheet 3a of the plurality of divided electrical steel sheets 3a is different from the division positions in the other divided electrical steel sheets 3a. Thus, by preventing the division position from becoming the specific position of the divided electrical steel sheet 3a in the axial direction b, it is possible to reduce a decrease in rigidity of the laminated magnetic pole pieces 2. In the embodiment shown in FIG. 8, the above-described division positions are different between the adjacent divided electrical steel sheets 3a. The division position in each divided electrical steel sheet 3a may randomly be determined.

In some other embodiments, some of the electrical steel sheets 3 composing any magnetic pole piece 2 may be the divided electrical steel sheets 3a. That is, the magnetic pole piece 2 is composed of one or more divided electrical steel sheets 3a constituted by the plurality of electrical steel sheet pieces 3p, and one or more electrical steel sheets 3 which are not constituted by one electrical steel sheet piece 3p (hereinafter, referred to as the ordinary electrical steel sheets 3). Then, the above-described division positions may be different between the adjacent divided electrical steel sheets 3a. Lamination may be performed such that one or more divided electrical steel sheets 3a are sandwiched between two adjacent ordinary electrical steel sheets 3. In this case, if each divided electrical steel sheet 3a is fixed to the ordinary electrical steel sheet 3, the electrical steel sheet pieces 3p constituting each divided electrical steel sheet 3a can be integrated as the magnetic pole piece 2 without being connected by welding or the like.

With the above configuration, at least one electrical steel sheet 3 composing the magnetic pole piece 2 is constituted by the plurality of electrical steel sheet pieces 3p divided at one or more positions in the longitudinal direction. Thus, it is possible to reduce the eddy current loss by reducing the loop of the eddy current generated in the plane of the electrical steel sheets 3.

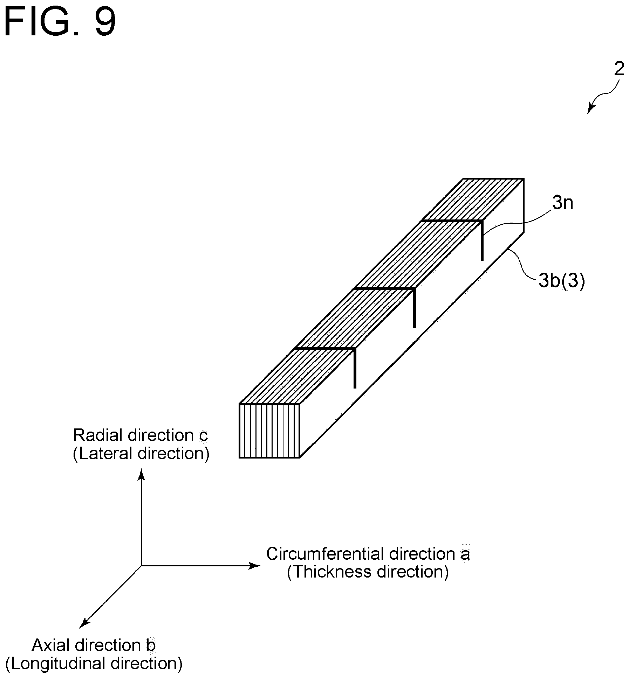

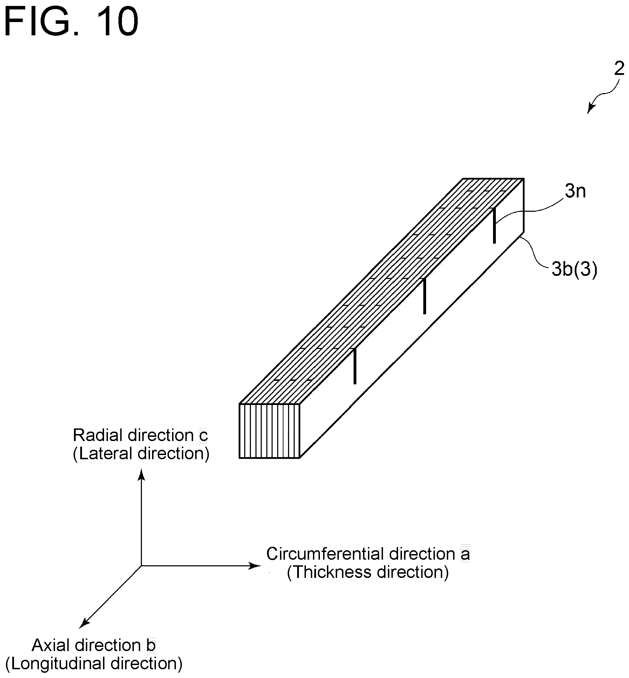

FIG. 9 is a schematic view of the magnetic pole piece 2 including a slit electrical steel sheet 3b according to an embodiment of the present invention. Further, FIG. 10 is a schematic view of the magnetic pole piece 2 including the slit electrical steel sheet 3b according to an embodiment of the present invention, where notch 3n positions are dispersed.

In some embodiments, at least one of the plurality of electrical steel sheets 3 composing the magnetic pole piece 2 may include one or more notches 3n (slits) along the radial direction c as shown in FIGs. 9 and 10, instead of dividing one electrical steel sheet 3 into the plurality of electrical steel sheet pieces 3p as in the above-described divided electrical steel sheet 3a.

That is, in some embodiments, as shown in FIGs. 9 and 10, at least one of the plurality of electrical steel sheets 3 composing the magnetic pole piece 2 is the slit electrical steel sheet 3b in which the notches 3n are formed along the lateral direction. Further, in some other embodiments, as shown in FIG. 10, the magnetic pole piece 2 may include at least two slit electrical steel sheets 3b whose above-described notch 3n positions in the longitudinal direction are different from each other. In other words, the magnetic pole piece 2 includes at least two divided electrical steel sheets 3a in a relationship where the above-described notch 3n position of the first slit electrical steel sheet 3b in the longitudinal direction is different from the above-described notch 3n position of the second slit electrical steel sheet 3b in the longitudinal direction.

The details are the same as in the case of the above-described divided electrical steel sheet 3a, the divided electrical steel sheet 3a and the division position in the description can, respectively, be replaced with the slit electrical steel sheet 3b and the notch 3n position, and the details are omitted. Thus, since the notch 3n position is not the specific position of the slit electrical steel sheet 3b in the axial direction b, it is possible to reduce the decrease in rigidity of the laminated magnetic pole pieces 2.

With the above configuration, in at least one electrical steel sheet 3 composing the magnetic pole piece 2, the notches 3n along the lateral direction are formed at one or more positions in the longitudinal direction. Thus, it is possible to reduce the eddy current loss by reducing the loop of the eddy current generated in the plane of the electrical steel sheet 3. Further, since the electrical steel sheet 3 is not divided in the axial direction b by using the slit electrical steel sheet 3b, workability of the lamination can be improved or the number of parts can be reduced, making it possible to reduce the cost.

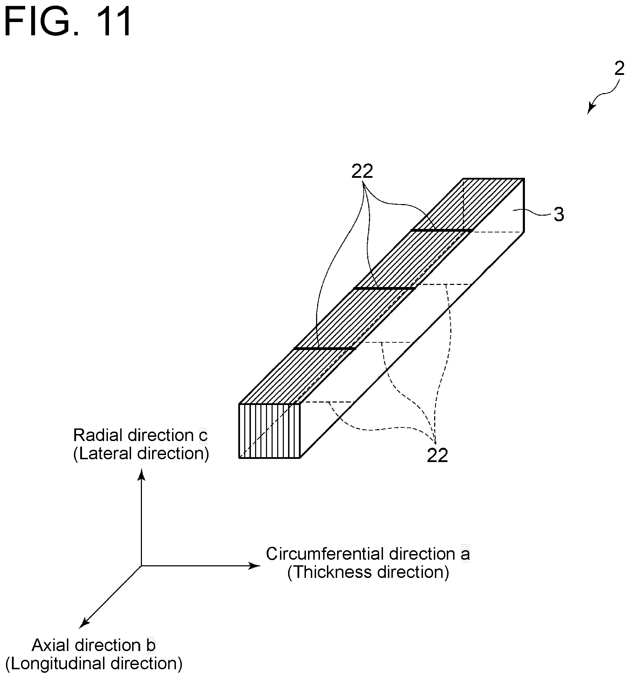

FIG. 11 is a schematic view of the magnetic pole piece 2 obtained by lamination by line welding according to an embodiment of the present invention.

In some embodiments, as shown in FIG. 11, at least one of the plurality of magnetic pole pieces 2 may further include linear weld portions 22 which are disposed on at least either of the outer circumferential surface or the inner circumferential surface of the magnetic pole piece 2, and extend along the lateral direction. That is, the plurality of electrical steel sheets 3 composing the magnetic pole piece 2 are integrated by the linear weld portions 22 along the thickness direction (circumferential direction a).

In the embodiment shown in FIG. 11, the plurality of (six in total in FIG. 11) linear weld portions 22 are formed in the magnetic pole piece 2 by holding the plurality of electrical steel sheets in a state where a pressure is applied in the thickness direction (pressurized clamp) while disposing the plurality of electrical steel sheets to be superimposed, and in that state, linearly welding both the outer circumferential surface and the inner circumference of the magnetic pole piece 2 at the plurality of positions, respectively, in the longitudinal direction (axial direction b). These plurality of linear weld portions 22 are disposed at intervals in the longitudinal direction. The linear weld portion 22 can never be too thin, and it is preferable that the thickness and the number of linear weld portions 22 are set such that the entire area of the weld portions 22 is minimum within the range where the requirement for fixing is satisfied.

In the case of the above-described divided electrical steel sheet 3a or slit electrical steel sheet 3b, the above-described linear weld portion 22 may be disposed at the division position or the notch 3n position, or may be disposed at a position different from these positions.

With the above configuration, the plurality of electrical steel sheets 3 composing the magnetic pole piece 2 are fixed by line welding separately in several places, for example, in a state where the plurality of laminated electrical steel sheets 3 are compressed. By the welding area is reduced by line welding, it is possible to reduce an influence of welding on the iron loss (eddy current loss).

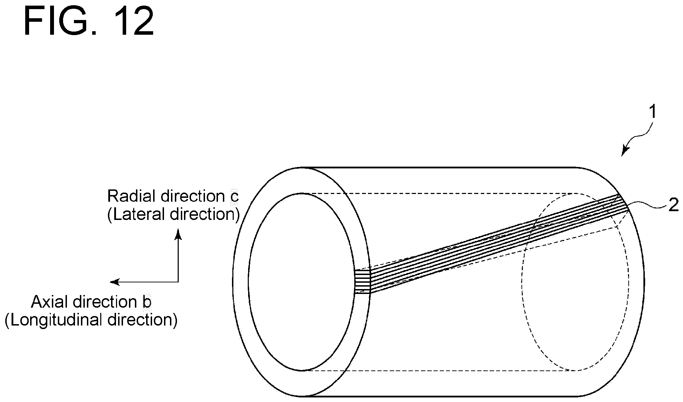

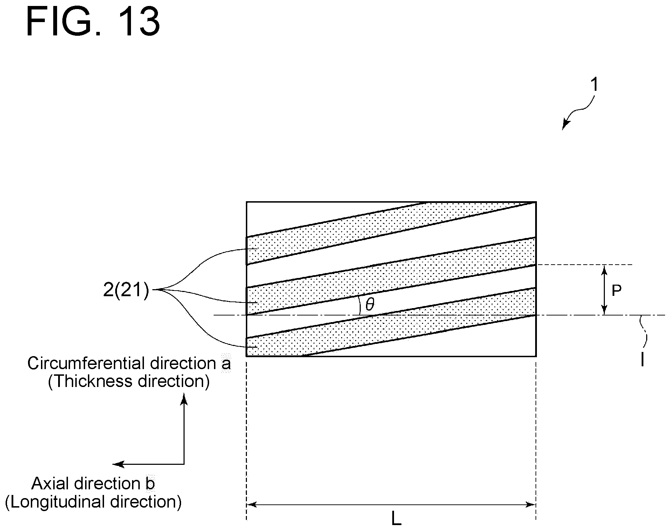

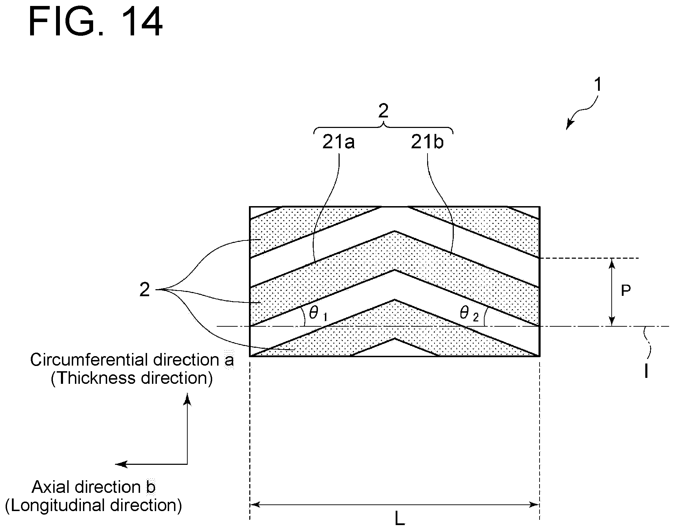

FIG. 12 is a schematic view of the magnetic pole piece 2 including inclined portions 21 according to an embodiment of the present invention. FIG. 13 is a schematic view showing an inclination pattern of the inclined portions 21 according to an embodiment of the present invention. Further, FIG. 14 is a schematic view showing an inclination pattern of the inclined portions 21 according to another embodiment of the present invention.

In the above-described embodiments, the magnetic pole piece 2 is linearly disposed along the axial direction b, but in some other embodiments, as shown in FIGs. 12 to 14, each of the plurality (all) of magnetic pole pieces 2 of the magnetic pole piece device 1 may include the inclined portion 21 inclined with respect to the axial direction b.

In the embodiments shown in FIGs. 12 and 13, each of the plurality of magnetic pole pieces 2 of the magnetic pole piece device 1 is inclined by a predetermined inclination angle θ (skew angle; the same applies hereinafter) in one direction with respect to the axial direction b (axis 1). That is, the entire magnetic pole piece 2 is the inclined portion 21. Thus, the positions in the circumferential direction a of both ends of each magnetic pole piece 2 in the axial direction b are different from each other.

On the other hand, in the embodiment shown in FIG. 14, each of the plurality of magnetic pole pieces 2 of the magnetic pole piece device 1 includes the inclined portions 21 inclined oppositely to each other in one direction with respect to the axial direction b (axis 1). That is, each magnetic pole piece 2 includes a first inclined portion 21a inclined from one end in the axial direction b to the vicinity of the center of the magnetic pole piece 2 by a predetermined angle (inclination angle θ₁) in one direction with respect to the axial direction b (axis 1), and a second inclined portion 21b oppositely inclined from the vicinity of the center to another end by the same angle (inclination angle θ₂ (θ₁=θ₁)) in one direction. Thus, the positions in the circumferential direction a of both ends of each magnetic pole piece 2 in the axial direction b are the same as each other.

However, the present invention is not limited to the present embodiment. In some other embodiments, the inclination angle θ₁ of the first inclined portion 21a and the inclination angle θ₂ of the second inclined portion 21b may have different absolute values.

Further, as for the above-described inclination angle θ, as shown in FIG. 13, θ≤tan⁻¹(P/L) may be satisfied, where L is a length of the magnetic pole piece device 1 in the axial direction b, P is an interval (pitch) between the magnetic pole pieces 2 in the magnetic pole piece device 1, and θ is the angle (inclination angle) between the axial direction b and the extension direction of the inclined portion 21 (the first inclined portion 21a or the second inclined portion 21b). Further, considering that the inclination angle θ is greater than 0, 0<0≤0≤tan⁻¹(P/L) may be satisfied.

More specifically, since the length of the magnetic pole piece device 1 in the circumferential direction a is 2*π*r if the length is the distance (radius r) from the axis 1, P=2*π*r/N holds, where N is the number of plurality of magnetic pole pieces 2 of the magnetic pole piece device 1. Therefore, θ≤tan⁻¹(2πr/N/L) holds. In the embodiment as shown in FIG. 14 as well, the inclination angles θ (θ₁, θ₂) of both the first inclined portion 21a and the second inclined portion 21b may each satisfy the above relation.

With the above configuration, the inclination angle θ (skew angle) of the inclined portion 21 with respect to the axial direction b corresponds to, at maximum, the interval (one pitch) between the plurality of magnetic pole pieces 2 disposed at intervals along the circumferential direction a. Thus, it is possible to suppress harmonics more effectively.

The present invention is not limited to the above-described embodiments, and also includes an embodiment obtained by modifying the above-described embodiments and an embodiment obtained by combining these embodiments as appropriate.

### (Appendix)

(1) A magnetic pole piece device (1) according to at least one embodiment of the present invention is a magnetic pole piece device (1) disposed between an inner diameter side magnet field (8) and an outer diameter side magnet field (7) of a magnetic gear (9), that includes a plurality of magnetic pole pieces (2) disposed at intervals in a circumferential direction (a) of the magnetic gear (9). Each of the plurality of magnetic pole pieces (2) includes a plurality of plate-shaped electrical steel sheets (3) having a longitudinal direction. The plurality of electrical steel sheets (3) are laminated along the circumferential direction (a), with the longitudinal direction being along an axial direction (b) of the magnetic gear (9).

With the above configuration (1), each magnetic pole piece (2) (pole piece) of the magnetic pole piece device (1) is formed of the plurality of electrical steel sheets (3) laminated along the circumferential direction (a) of the magnetic gear (9) (magnetic pole piece device (1)), with the longitudinal direction being along the axial direction (b) of the magnetic gear (9). Consequently, in the state of being disposed in the magnetic pole piece device (1), the ends of each magnetic pole piece (2) in the axial direction (b) and the radial direction (c) are each formed into a slit shape by superimposing the plurality of electrical steel sheets (3). Thus, it is possible to reduce an iron loss (eddy current loss) due to a leakage flux at the end of each magnetic pole piece (2) in the axial direction (b). Thus, it is possible to improve efficiency of the magnetic gear (9) (flux-modulated type) including such magnetic pole piece device (1).

Further, the number of laminated electrical steel sheets (3) required to form the magnetic pole piece (2) can be reduced as compared with the case where the plurality of electrical steel sheets (3) are laminated along the axial direction (b). Thus, it is possible to improve the dimensional accuracy of the magnetic pole piece (2) after the lamination (dimensional error after lamination=error in sheet thicknessxnumber of laminated sheets). Further, since the number of laminated electrical steel sheets (3) is thus small, it is possible to reduce misalignment in end faces of the respective electrical steel sheets (3) when the plurality of electrical steel sheets (3) are superimposed during the production of the magnetic pole piece (2) and, for example, in the case of pressure clamping and fixing by line welding, line welding fixing can easily be applied. Although a non-magnetic long fastening bolt made from a titanium alloy or the like is used when the plurality of electrical steel sheets (3) are laminated along the axial direction (b), such bolt becomes unnecessary, and it is also possible to reduce the number of parts and a cost.

(2) In some embodiments, in the above configuration (1), each of the plurality of magnetic pole pieces (2) further includes a highly thermal conductive plate (4) which is disposed between at least a pair of adjacent electrical steel sheets (3) of the plurality of electrical steel sheets (3) and has a higher thermal conductivity than the electrical steel sheets (3).

With the above configuration (2), in each of the plurality of magnetic pole pieces (2), the plurality of electrical steel sheets (3) are laminated while sandwiching the at least one highly thermal conductive plate (4). By causing heat conduction between the above-described two air gaps (G) with such highly thermal conductive plate (4), it is possible to cool the magnetic pole piece (2) more uniformly and efficiently. Thus, it is possible to more efficiently cool each magnetic pole piece (2) by the cooling medium supplied to the respective air gaps (G) on the inner circumferential side and the outer circumferential side of the magnetic pole piece device (1).

(3) In some embodiments, in the above configuration (2), the highly thermal conductive plate (4) is formed of carbon fiber reinforced plastic, and the highly thermal conductive plate (4) includes a section where a fiber orientation direction of the carbon fiber reinforced plastic is along a radial direction (c) of the magnetic gear (9). With the above configuration (3), the fibers of the carbon fiber reinforced plastic (CFRP) forming the highly thermal conductive plate (4) are oriented along the radial direction (c) at least in part. Heat is better conducted along the fiber orientation direction (fiber direction (D)). Thus, since the fiber direction (D) is along the radial direction (c), it is possible to cool the magnetic pole piece (2) more effectively as compared with the case where the fiber direction (D) is along a direction other than the radial direction (c).

(4) In some embodiments, in the above configuration (3), the carbon fiber reinforced plastic uses pitch-based carbon fiber.

With the above configuration (4), since the highly thermal conductive plate (4) is formed of pitch-based carbon fiber reinforced plastic (CFRP), it is possible to obtain the appropriate highly thermal conductive plate (4).

(5) In some embodiments, in the above configurations (1) to (4), each of the plurality of electrical steel sheets (3) includes: a body portion (31) having a predetermined height in the radial direction (c); and a small height end portion (32) which is disposed on at least one side of the body portion (31) in the longitudinal direction and has a height in the radial direction (c) smaller than the height of the body portion (31) in the radial direction (c).

With the above configuration (5), in each electrical steel sheet (3), the height of the end portion (32) in the radial direction (c) on the at least one side in the longitudinal direction (axial direction b) is smaller than the height of the body portion (31) in the radial direction (c). Thus, it is possible to reduce the axial leakage flux at the end of the magnetic pole piece (2), and it is possible to suppress the iron loss (eddy current loss).

(6) In some embodiments, in the above configuration (5), at least one of the plurality of magnetic pole pieces (2) is a first magnetic pole piece (2a) which is composed of the plurality of electrical steel sheets (3) each having the small height end portion (32), and the small height end portion (32) of the first magnetic pole piece (2a) is mounted with a cover member (33) having a higher thermal conductivity than the electrical steel sheets (3).

With the above configuration (6), the end of the magnetic pole piece (2), which is composed of the plurality of electrical steel sheets (3) having the small height end portions (32), on the small height end portion (32) side is mounted with the cover member (33) formed of, for example, a pitch-based CFRP block having the higher thermal conductivity than the electrical steel sheets (3). Thus, it is possible to further improve coolability of the magnetic pole piece (2).

(7) In some embodiments, in the above configurations (1) to (6), P1<P2 is satisfied, where P1 is a magnetic permeability of each of the plurality of electrical steel sheets (3) along the longitudinal direction and P2 is a magnetic permeability of each of the plurality of electrical steel sheets (3) along a lateral direction orthogonal to the longitudinal direction.

With the above configuration, each electrical steel sheet (3) has anisotropy to have good magnetic characteristics (high magnetic permeability) in the radial direction (c) and have a lower magnetic permeability in the axial direction (b), when installed in the magnetic gear (9) as the constituent member of the magnetic pole piece (2). The magnetic field directions of the outer diameter side magnet field (7) located on the outer circumferential side of the magnetic pole piece device (1) and the inner diameter side magnet field (8) located on the inner circumferential side of the magnetic pole piece device (1) are both in the radial direction (c), and each electrical steel sheet (3) has the anisotropy of the magnetic permeability so as to follow these magnetic field directions, making it possible to further reduce the leakage magnetic flux in the axial direction (b). Thus, it is possible to further improve the torque or efficiency of the magnetic gear (9).

(8) In some embodiments, in the above configurations (1) to (7), at least one of the plurality of electrical steel sheets (3) is a divided electrical steel sheet (3a) which includes a plurality of plate-shaped electrical steel sheet (3) pieces arranged along the axial direction (b).

With the above configuration (8), at least one electrical steel sheet (3) composing the magnetic pole piece (2) is constituted by the plurality of electrical steel sheet (3) pieces divided at one or more positions in the longitudinal direction. Thus, it is possible to reduce the eddy current loss generated in the plane of the electrical steel sheet (3).

(9) In some embodiments, in the above configuration (8), the at least one divided electrical steel sheet (3a) includes a first divided electrical steel sheet (3a) and a second divided electrical steel sheet (3a), and a division position of the first divided electrical steel sheet (3a) in the longitudinal direction is different from a division position of the second divided electrical steel sheet (3a) in the longitudinal direction.

With the above configuration (9), since the division position is not the specific position of the divided electrical steel sheet (3a) in the axial direction (b), it is possible to reduce a decrease in rigidity of the laminated magnetic pole pieces (2).

(10) In some embodiments, in the above configurations (1) to (9), at least one of the plurality of electrical steel sheets (3) is a slit electrical steel sheet (3b) which has a notch formed along a lateral direction orthogonal to the longitudinal direction.

With the above configuration (10), in at least one electrical steel sheet (3) composing the magnetic pole piece (2), the notches along the lateral direction are formed at one or more positions in the longitudinal direction. Thus, it is possible to reduce the eddy current loss generated in the plane of the electrical steel sheet (3).

(11) In some embodiments, in the above configuration (10), the at least one slit electrical steel sheet (3b) includes a first slit electrical steel sheet (3b) and a second slit electrical steel sheet (3b), and a position of the notch in the first slit electrical steel sheet (3b) in the longitudinal direction is different from a position of the notch in the second slit electrical steel sheet (3b) in the longitudinal direction.

With the above configuration (11), since the notch position is not the specific position of the slit electrical steel sheet (3b) in the axial direction (b), it is possible to reduce the decrease in rigidity of the laminated magnetic pole pieces (2).

(12) In some embodiments, in the above configurations (1) to (11), at least one of the plurality of magnetic pole pieces (2) further includes a linear weld portion (22) which is disposed on at least either of an outer circumferential surface or an inner circumferential surface, and extends along a lateral direction orthogonal to the longitudinal direction

With the above configuration (12), the plurality of electrical steel sheets (3) composing the magnetic pole piece (2) are fixed by line welding separately in several places, for example, in a state where the plurality of laminated electrical steel sheets (3) are compressed. Since the welding area can be reduced by line welding, it is possible to reduce an influence of welding on the iron loss (eddy current loss).

(13) In some embodiments, in the above configurations (1) to (12), each of the plurality of magnetic pole pieces (2) includes an inclined portion (21) inclined with respect to the axial direction (b).

With the above configuration (13), it is possible to cancel harmonics peculiar to a magnetic geared generator (motor) in which the magnetic gear (9) and a generator (motor) are integrated, and it is possible to reduce a vibration or noise.

(14) In some embodiments, in the above configuration (13), θ≤tan⁻¹(P/L) is satisfied, where P is an interval between the plurality of magnetic pole pieces (2) in the magnetic pole piece device (1), L is a length of the magnetic pole piece device (1) in the axial direction (b), and θ is an angle between the axial direction (b) and an extension direction of the inclined portion (21).

With the above configuration (14), the inclination angle (skew angle) of the inclined portion (21) with respect to the axial direction (b) corresponds to, at maximum, the interval (one pitch) between the plurality of magnetic pole pieces (2) disposed at intervals along the circumferential direction (a). Thus, it is possible to suppress harmonics more effectively.

(15) A magnetic gear (9) according to at least one embodiment of the present invention includes: an inner diameter side magnet field (8); an outer diameter side magnet field (7) disposed on an outer diameter side relative to the inner diameter side magnet field (8); and the magnetic pole piece device (1) according to any one of claims 1 to 14 disposed between the inner diameter side magnet field (8) and the outer diameter side magnet field (7).

With the above configuration (15), the magnetic gear (9) includes the above-described magnetic pole piece device (1). Thus, it is possible to provide the magnetic gear (9) for achieving the same effect as the above configurations (1) to (14).

### Reference Signs List

- 1: Magnetic pole piece device
- 2: Magnetic pole piece
- 2a: First magnetic pole piece
- 21: Inclined portion
- 21a: First inclined portion
- 21b: Second inclined portion
- 22: Weld portion
- 3: Electrical steel sheet
- 31: Body portion
- 32: Small height end portion
- 33: Cover member
- 3a: Divided electrical steel sheet
- 3p: Electrical steel sheet piece
- 3b: Slit electrical steel sheet
- 4: Highly thermal conductive plate
- 52: Outer circumferential cover member
- 53: Inner circumferential cover member
- 54: Interjacent space
- 7: Outer diameter side magnet field
- 71: Magnetic pole pair
- 72: Support member
- 73: Coil
- 8: Inner diameter side magnet field
- 81: Magnetic pole pair
- 82: Support member
- 9: Magnetic gear
- G: Air gap
- a: Circumferential direction
- b: Axial direction
- c: Radial direction
- 1: Axis
- D: Fiber direction (CFRP)

## Claims

1. A magnetic pole piece device disposed between an inner diameter side magnet field and an outer diameter side magnet field of a magnetic gear, comprising:
a plurality of magnetic pole pieces disposed at intervals in a circumferential direction of the magnetic gear,
wherein each of the plurality of magnetic pole pieces includes a plurality of plate-shaped electrical steel sheets having a longitudinal direction, and
wherein the plurality of electrical steel sheets are laminated along the circumferential direction, with the longitudinal direction being along an axial direction of the magnetic gear.

2. The magnetic pole piece device according to claim 1,
wherein each of the plurality of magnetic pole pieces further includes a highly thermal conductive plate which is disposed between at least a pair of adjacent electrical steel sheets of the plurality of electrical steel sheets and has a higher thermal conductivity than the electrical steel sheets.

3. The magnetic pole piece device according to claim 2,
wherein the highly thermal conductive plate is formed of carbon fiber reinforced plastic, and
wherein the highly thermal conductive plate includes a section where a fiber orientation direction of the carbon fiber reinforced plastic is along a radial direction of the magnetic gear.

4. The magnetic pole piece device according to claim 3,
wherein the carbon fiber reinforced plastic uses pitch-based carbon fiber.

5. The magnetic pole piece device according to any one of claims 1 to 4,
wherein each of the plurality of electrical steel sheets includes:
a body portion having a predetermined height in the radial direction; and
a small height end portion which is disposed on at least one side of the body portion in the longitudinal direction and has a height in the radial direction smaller than the height of the body portion in the radial direction.

6. The magnetic pole piece device according to claim 5,
wherein at least one of the plurality of magnetic pole pieces is a first magnetic pole piece which is composed of the plurality of electrical steel sheets each having the small height end portion, and
wherein the small height end portion of the first magnetic pole piece is mounted with a cover member having a higher thermal conductivity than the electrical steel sheets.

7. The magnetic pole piece device according to any one of claims 1 to 6,
wherein P1<P2 is satisfied, where P1 is a magnetic permeability of each of the plurality of electrical steel sheets along the longitudinal direction and P2 is a magnetic permeability of each of the plurality of electrical steel sheets along a lateral direction orthogonal to the longitudinal direction.

8. The magnetic pole piece device according to any one of claims 1 to 7,
wherein at least one of the plurality of electrical steel sheets is a divided electrical steel sheet which includes a plurality of plate-shaped electrical steel sheet pieces arranged along the axial direction.

9. The magnetic pole piece device according to claim 8,
wherein the at least one divided electrical steel sheet includes a first divided electrical steel sheet and a second divided electrical steel sheet, and
wherein a division position of the first divided electrical steel sheet in the longitudinal direction is different from a division position of the second divided electrical steel sheet in the longitudinal direction.

10. The magnetic pole piece device according to any one of claims 1 to 9,
wherein at least one of the plurality of electrical steel sheets is a slit electrical steel sheet which has a notch formed along a lateral direction orthogonal to the longitudinal direction.

11. The magnetic pole piece device according to claim 10,
wherein the at least one slit electrical steel sheet includes a first slit electrical steel sheet and a second slit electrical steel sheet, and
wherein a position of the notch in the first slit electrical steel sheet in the longitudinal direction is different from a position of the notch in the second slit electrical steel sheet in the longitudinal direction.

12. The magnetic pole piece device according to any one of claims 1 to 11,
wherein at least one of the plurality of magnetic pole pieces further includes a linear weld portion which is disposed on at least either of an outer circumferential surface or an inner circumferential surface, and extends along a lateral direction orthogonal to the longitudinal direction.

13. The magnetic pole piece device according to any one of claims 1 to 12,
wherein each of the plurality of magnetic pole pieces includes an inclined portion inclined with respect to the axial direction.

14. The magnetic pole piece device according to claim 13,
wherein θ≤tan⁻¹(P/L) is satisfied,
where P is an interval between the plurality of magnetic pole pieces in the magnetic pole piece device,
L is a length of the magnetic pole piece device in the axial direction, and
θ is an angle between the axial direction and an extension direction of the inclined portion.

15. A magnetic gear, comprising:
an inner diameter side magnet field;
an outer diameter side magnet field disposed on an outer diameter side relative to the inner diameter side magnet field; and
the magnetic pole piece device according to any one of claims 1 to 14 disposed between the inner diameter side magnet field and the outer diameter side magnet field.
